(19) Europäisches Patentamt / European Patent Office / Office européen des brevets

(11) **EP 3 846 982 B1**

(12) **FASCICULE DE BREVET EUROPEEN**

(45) Date de publication et mention de la délivrance du brevet:
**08.11.2023 Bulletin 2023/45**

(21) Numéro de dépôt: **18797002.5**

(22) Date de dépôt: **07.09.2018**

(51) Classification Internationale des Brevets (IPC):
**B25J 13/08** (2006.01)    **G01D 5/24** (2006.01)

(52) Classification Coopérative des Brevets (CPC):
**B25J 13/085; B25J 13/084;** G05B 2219/37272;
G05B 2219/37284

(86) Numéro de dépôt international:
**PCT/FR2018/052189**

(87) Numéro de publication internationale:
**WO 2020/049230 (12.03.2020 Gazette 2020/11)**

(54) **PROCÉDÉ ET DISPOSITIF DE CONTRÔLE D'UN ROBOT, ET ROBOT MUNI D'UN TEL DISPOSITIF**

VERFAHREN UND VORRICHTUNG ZUR STEUERUNG EINES ROBOTERS UND ROBOTER MIT EINER SOLCHEN VORRICHTUNG

METHOD AND DEVICE FOR CONTROLLING A ROBOT, AND ROBOT PROVIDED WITH SUCH A DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**14.07.2021 Bulletin 2021/28**

(73) Titulaire: **FOGALE SENSORS**
**30900 Nimes (FR)**

(72) Inventeurs:
• **PORQUE, Jérôme**
**34280 LA GRANDE MOTTE (FR)**
• **ROZIERE, Didier**
**30900 Nîmes (FR)**
• **COURTEVILLE, Alain**
**30111 Congenies (FR)**

(74) Mandataire: **IPAZ**
**Bâtiment Platon**
**Parc Les Algorithmes**
**91190 Saint-Aubin (FR)**

(56) Documents cités:
**DE-A1-102007 020 131    DE-A1-102016 201 541**

## Description

L'invention concerne un procédé et un dispositif de contrôle d'un robot à partir d'un contact avec une surface dudit robot. Elle concerne également un robot, en particulier un robot collaboratif, muni d'un tel dispositif de contrôle.

Le domaine de l'invention est le domaine des robots, et en particulier le domaine du contrôle de robots, par exemple dans le domaine de la robotique industrielle ou des robots de service, des robots médicaux ou domestiques, ou encore des robots collaboratifs, également appelés « cobots ».

### ETAT DE LA TECHNIQUE

Les systèmes robotiques, en particulier les robots collaboratifs, sont parfois destinés à être manipulés par des opérateurs humains, ou coopérer avec des opérateurs humains en vue de réaliser des tâches. Par exemple, l'opérateur peut manipuler le robot, pour le contrôler et/ou pour configurer le robot pour réaliser une tâche.

Pour ce faire, le robot peut être contrôlé par une approche ou un contact d'un objet de commande, tel qu'une main de l'opérateur. Lorsque l'objet de commande est détecté en approche de, ou en contact avec, une surface du robot, une commande de contrôle peut être générée pour déplacer le robot dans telle ou telle direction, ou pour déclencher un arrêt d'urgence visant à préserver l'opérateur ou d'éviter d'entrer en collision avec un objet environnant.

On connaît notamment des capteurs de type capacitifs, positionnés sur la surface extérieure du robot, et qui permettent de détecter la présence d'objets de commande ou d'opérateurs à proximité ou en contact avec le robot.

On connaît aussi le document E. Magrini, F. Flacco and A. De Luca, "Estimation of contact forces using a virtual force sensor," 2014 IEEE/RSJ International Conférence on Intelligent Robots and Systems, Chicago, IL, 2014, pp. 2126-2133, qui décrit un procédé permettant l'estimation d'une force de contact appliquée sur une partie de la surface d'un robot, en utilisant

les capteurs de couple internes au robot.

Le document DE 10 2016 201 541 A1 divulgue un robot doté d'une peau tactile.

Le document DE 10 2007 020 131 A1 divulgue un robot doté d'un capteur tactile.

Le document WO 2018/108476 A1 divulgue la détermination d'un contact en fonction d'une capacité électrode-objet.

Un but de la présente invention est de proposer un procédé de contrôle d'un robot pouvant étendre le champ d'interactivité, et le registre de commandes possibles, à partir d'un contact d'un objet de commande avec le robot.

Un autre but de la présente invention est de proposer un procédé de contrôle d'un robot pouvant étendre le champ d'interactivité, et le registre de commandes possibles, à partir d'un contact d'un objet de commande avec le robot, de manière simple et peu onéreuse.

Un autre but de la présente invention est de proposer un procédé de contrôle d'un robot pouvant étendre le champ d'interactivité, et le registre de commandes possibles, tout en assurant un fonctionnement du robot optimal en termes de sécurité.

### EXPOSE DE L'INVENTION

L'invention propose d'atteindre au moins un de ces objectifs par un procédé selon la revendication 1.

Ainsi, le procédé selon l'invention propose de détecter, non seulement un contact ou une pluralité de contacts d'un ou de plusieurs objets de commande avec une surface du robot, mais aussi l'étendue de ce ou de ces contacts entre le ou les objets de commande et la surface du robot. Le procédé selon l'invention propose en outre de contrôler le robot en fonction d'une ou de plusieurs informations relatives à cette ou ces étendues de contact. Autrement dit, le procédé selon l'invention propose de générer différentes commandes au sein du robot, en fonction de l'étendue, ou d'étendues, de contact entre un ou des objets de commande et le robot.

Ainsi, en utilisant non seulement une information de contact, mais aussi une information relative à l'étendue de contact, le procédé selon l'invention permet d'augmenter et de varier le champ d'interactivité, et le registre de commandes possibles, à partir d'un ou de plusieurs contacts objets de commande avec une surface du robot, et ce, sans utilisation de capteurs additionnels autre que ceux équipant le robot pour la détection d'un contact.

La ou les informations relatives à l'étendue du contact peuvent être ou comprendre par exemple une surface, ou une forme, de l'étendue de contact.

Dans la présente demande, par « étendue de contact » on entend la surface de contact entre un objet de commande et une surface du robot.

Par ailleurs, le contact peut comprendre un contact franc, appuyé, ou un quasi contact, tel qu'un effleurement.

Dans la présente demande, « objet » ou « objet de commande » désigne tout objet, ou toute personne, pouvant se trouver dans l'environnement de l'appareil.

Dans la présente demande, deux potentiels alternatifs sont identiques à une fréquence donnée lorsqu'ils comportent chacun une composante alternative identique ou similaire à cette fréquence, c'est-à-dire de même amplitude (par exemple à quelques pourcents près) et de même phase (par exemple à quelques degrés près). Ainsi, l'un au moins des deux potentiels identiques à ladite fréquence peut comporter en outre une composante continue, et/ou une composante alternative de fréquence différente de ladite fréquence donnée.

De manière similaire, deux potentiels alternatifs sont différents à la fréquence donnée lorsqu'ils ne comportent pas de composante alternative identique ou similaire à cette fréquence donnée.

Dans la présente demande, le terme « potentiel de masse » ou « potentiel de masse générale » désigne un potentiel de référence de l'électronique du robot ou de son environnement, qui peut être par exemple une masse électrique. Ce potentiel de masse peut correspondre à un potentiel de terre, ou à un autre potentiel relié ou non au potentiel de terre.

Suivant l'invention, l'au moins un capteur de position comprend au moins une électrode de mesure capacitive agencée pour fournir un signal de mesure relatif à une capacité de couplage entre ladite électrode de mesure et l'objet.

La détection de contact entre un objet et le robot prend en compte, ou est réalisée en fonction dudit signal de mesure.

La détection de contact peut par exemple être réalisée en comparant le signal de mesure, ou une valeur déduite à partir dudit signal de mesure, à un seuil de référence correspondant à un contact.

Ce seuil de référence peut être préalablement renseigné.

Ce seuil de référence peut être mesuré lors d'une phase de calibration par exemple.

La ou les électrodes de mesure capacitives peuvent être recouvertes d'une couche de matériau diélectrique, par exemple constituant la surface ou la paroi du robot. Cette couche peut être rigide ou semi-rigide. Elle peut être aussi souple de sorte à s'écraser en cas d'appui.

Ainsi, la détection de contact se fait entre l'objet et le matériau diélectrique. Le contact peut être notamment détecté par une variation significative du signal de mesure capacitive lorsque l'objet entre en contact avec ce matériau diélectrique.

Suivant des modes de mise en oeuvre, l'au moins un capteur de position peut comprendre au moins une électrode d'excitation, et au moins une électrode de mesure capacitive en couplage capacitif avec l'au moins une électrode d'excitation. Dans ce cas, la capacité de couplage entre l'électrode de mesure et l'objet est détectée comme une perturbation de la capacité entre l'électrode d'excitation et l'électrode de mesure, mesurée en l'absence d'objet, selon un procédé de mesure capacitive dit « mutual capacitance » en Anglais.

Suivant d'autres modes de mise en oeuvre, l'au moins un capteur de position peut comprendre au moins une électrode de mesure capacitive agencée pour fournir un signal de mesure relatif à une capacité de couplage, dite capacité électrode-objet, correspondant à la capacité formée entre l'électrode de mesure et l'objet, selon un procédé de mesure capacitive dit « self capacitance » en Anglais.

Suivant un exemple de réalisation non limitatif, la détermination de l'étendue de contact peut prendre en compte un signal fourni par une électrode de mesure, un signal de mesure nominal préalablement déterminé, et la surface de ladite électrode de mesure.

Le signal de mesure nominal peut correspondre au signal de mesure obtenu avec un objet en contact avec la totalité de la surface de l'électrode, déterminé par exemple par calibrage et/ou calcul.

Cet exemple de réalisation est particulièrement pertinent lorsque les électrodes de mesure utilisées sont grandes de sorte que l'étendue de contact, notée $E_c$, est inférieure à la surface d'une électrode de mesure. Dans ce cas, l'objet est en contact avec une seule électrode de mesure, ou avec quelques électrodes de mesures adjacentes.

Dans ce cas, l'étendue de contact, ou plus précisément la surface de l'étendue de contact $E_{ci}$ peut être déterminée pour chaque électrode de mesure concernée en utilisant la mesure fournie par cette électrode de mesure et la surface de ladite électrode de mesure, par exemple en utilisant la relation suivante :

$$E_{ci} = (\text{Signal de mesure})/(\text{signal de mesure nominal}) \times (\text{Surface de l'électrode})$$

La surface de l'étendue de contact $E_c$ correspond alors à une somme des surfaces des étendues de contact $E_{ci}$ des électrodes concernées.

En outre, si l'étendue de contact couvre plusieurs électrodes, on peut également en déterminer sa forme à partir de la disposition géométrique de ces électrodes.

Suivant un autre exemple de réalisation non limitatif, lorsque le contact est détecté par plusieurs électrodes de mesure, l'étendue de contact peut être déterminée en prenant en compte la surface couverte par lesdites électrodes de mesure détectant ledit contact.

On peut ainsi obtenir une information de surface et/ou de forme de l'étendue de contact.

Cet exemple de réalisation est particulièrement pertinent lorsque le robot est équipé d'une multitude d'électrodes de mesure de petite taille de sorte que l'étendue de contact, notée E$_c$, est supérieure à la surface d'une électrode de mesure.

Dans ce cas, les électrodes de mesure qui détectent le contact avec l'objet de commande sont identifiées. L'étendue de contact peut être déterminée en calculant la zone couverte par l'ensemble de ces électrodes de mesure détectant le contact. La surface de cette zone correspond à la somme des surfaces des électrodes de mesure qui détectent le contact, à laquelle sont ajoutées les surfaces se trouvant entre ces électrodes de mesure dans le cas où elles sont écartées les unes des autres. La forme de cette zone peut être déterminée à partir de la disposition géométrique des électrodes de mesure.

Le procédé selon l'invention peut en outre comprendre une étape de mesure d'un couple suivant au moins un axe, dit de mesure, par au moins un capteur de couple équipant le robot.

Ainsi, il est possible de déterminer le couple généré par un objet de commande au niveau du robot lorsqu'il vient en contact avec le robot.

Le procédé selon l'invention peut mettre en oeuvre une pluralité de capteurs de couple avec des axes de mesure distincts.

En particulier, le procédé selon l'invention peut mettre en oeuvre au moins deux capteurs de couple configurés pour mesurer au moins deux couples, suivant respectivement au moins un premier axe de mesure et un deuxième axe de mesure distincts et parallèles entre eux. Optionnellement, le procédé selon l'invention peut en outre mettre en oeuvre au moins un troisième capteur de couple configuré pour mesurer un couple suivant un troisième axe de mesure, d'orientation différente des, ou perpendiculaire aux, premiers et deuxièmes axes de mesure.

Avantageusement, le procédé selon l'invention peut en outre comprendre une étape de validation d'un contact d'un objet avec le robot, en utilisant au moins une mesure de couple.

Ainsi, le procédé selon l'invention permet de détecter de manière sûre un contact entre un objet de commande et une surface du robot. En effet, l'utilisation des mesures de couple permet de distinguer un objet à proximité immédiate de la surface du robot (qui ne génère pas de couple) d'un objet en contact avec cette surface, qui génère un couple résultant des moments de sa force d'appui. Il est ainsi possible de valider un contact de manière plus sûre qu'en se basant uniquement sur les mesures des capteurs de position.

Dans ce cas, la réalisation de l'étape de détermination de l'étendue de contact, et/ou la sélection et l'exécution d'une commande, peuvent être conditionnées à la validation du contact.

Suivant des modes d'implémentation, pour au moins un capteur de couple, l'étape de mesure de couple peut comprendre, une mesure d'une variation de couple, en particulier par rapport à une valeur de référence préalablement déterminée.

Cette mesure de variation permet de déterminer la partie ou la composante du couple effectivement due à un contact. En effet, en l'absence de contact, de manière générale, les capteurs de couple mesurent tout de même un couple dû à la masse du robot, son éventuelle charge et à la cinématique de ses déplacements. L'application d'un contact se traduit donc par une variation de ce couple.

Suivant des modes d'implémentation, la mesure de variation du couple peut comprendre une opération de filtrage passe-haut, analogique et/ou numérique, d'une mesure de couple.

Suivant des modes d'implémentation, le procédé selon l'invention peut comprendre, pour au moins un capteur de couple :

- une étape de mémorisation d'au moins un couple de référence, mesuré en l'absence de contact, et
- une utilisation dudit au moins un couple de référence pour déterminer un couple exercé par un contact.

Une mémorisation périodique des couples de référence permet, par différentiation lors de la détection d'un contact, de déterminer les composantes du couple mesuré effectivement dues aux forces appliquées par ce contact.

La mémorisation d'au moins un couple de référence peut être effectuée lors de la détection d'une approche par l'au moins un capteur de position. Cette implémentation est possible avec un capteur de position sensible à l'approche d'un objet, tel que par exemple un capteur capacitif. Dans ce cas, on anticipe la survenance d'un contact et mémorise au moins un couple de référence, lorsqu'un objet est détecté à proximité, pour ensuite déterminer le couple effectivement dû au contact. On évite ainsi de devoir mémoriser des couples de référence pour tous les capteurs de couple en permanence.

Alternativement, la mémorisation d'au moins un couple de référence peut être effectuée en l'absence de détection (ou uniquement en l'absence de détection) d'une approche par l'au moins un capteur de position. Dans ce cas, lorsqu'une approche est détectée, la ou les valeurs de couple de référence mémorisées avant la détection de cette approche peuvent être conservées. Cette configuration peut permettre de mémoriser des couples de référence plus précis ou représentatifs de la configuration du robot. En effet, suivant des modes de mise en oeuvre du robot, lorsqu'on objet est détecté à proximité le robot ralentit pour limiter la force de collision avec l'objet, ou même change de trajectoire. Cela peut générer des accélérations importantes qui se traduisent par des valeurs transitoires de couple importantes, qui ne doivent pas être utilisées comme couples de référence.

Les couples dus à la masse du robot, son éventuelle charge et à la cinématique de ses déplacements peuvent être aussi estimés par calibration et/ou modélisation du robot. Dans ce cas, le procédé selon l'invention peut comprendre une étape d'utilisation d'un couple de référence théorique, ou calculé, pour déterminer un couple exercé par l'application d'un contact, par différence entre un couple mesuré et un couple de référence théorique.

Suivant une caractéristique avantageuse, le procédé selon l'invention peut en outre comprendre, pour au moins un contact, une étape de détermination d'une force générée par ledit contact suivant au moins un axe de mesure, comprenant les étapes suivantes :

- détermination de la position dudit contact par l'au moins un capteur de position ;
- mesure, par au moins un capteur de couple, d'au moins un couple suivant ledit axe de mesure, et
- calcul de ladite force, en fonction de l'au moins un couple mesuré, et de la position dudit contact relativement audit axe de mesure ;

Dans ce cas, l'étape d'exécution d'une commande de contrôle peut prendre en compte ladite force générée par ledit contact.

Ainsi, le procédé selon l'invention permet d'augmenter encore plus le champ d'interactivité, et le registre de commandes possibles, à partir d'un contact d'un objet de commande avec une surface du robot. En effet, pour un contact donné il est possible de générer différentes commandes en fonction d'une part de l'étendue de contact, d'autre part de la force dudit contact.

De plus, la mesure de la force appliquée sur le robot est réalisée sans mettre en oeuvre de capteurs de pression spécifiques, en exploitant des capteurs qui sont présents de manière habituelle sur les robots pour remplir d'autres fonctions :

- les capteurs de couple sont présents sur la plupart des robots, en particulier au niveau des articulations, pour gérer les efforts et les contraintes résultant des interactions avec l'environnement ; et
- les capteurs de position sont présents sur les robots pour la détection de contact. Ils sont en général utilisés pour éviter les collisions entre le robot et des éléments de son environnement et sont sensibles soit au contact, soit à l'approche et au contact.

Dans la présente invention, une force est calculée à partir des moments qu'elle exerce respectivement sur les axes de mesure des capteurs de couple, et qui résultent en des couples mesurés par ces capteurs.

Les moments de la force dépendent notamment de la localisation de sa position d'application par rapport (ou relativement) aux axes de mesure des couples. Ces axes de mesure sont bien entendu considérés comme localisés dans l'espace, avec un point d'application (par exemple le capteur de couple) et une orientation. Plus précisément, ces moments dépendent de la longueur et de l'orientation dans l'espace des segments de droite qui joignent la position d'application de la force à l'axe de mesure correspondant, perpendiculairement à ce dernier.

La position du contact, qui est également la position d'application de la force exercée par le contact, relativement à au moins un axe de mesure, peut être déterminée en utilisant un modèle géométrique du robot.

Ce modèle géométrique peut comprendre notamment une description géométrique du robot avec les dimensions des différents éléments, segments ou parties. Il peut également comprendre la position (par exemple angulaire ou en translation) des parties mobiles comme les articulations, mesurée par exemple avec codeurs angulaires ou des règles optiques.

Ainsi ce modèle géométrique apporte toutes les informations nécessaires pour pouvoir positionner dans un même système de référence le ou les points (ou positions) d'application de force et le ou les axes de mesure de couple, et ainsi déterminer leur localisation relative.

Les moments de la force dépendent également de son intensité et de son orientation dans l'espace, qui peut être décrite par des composantes spatiales (ou vectorielles).

Suivant le nombre et la disposition des capteurs de couple, le calcul de la force peut fournir une description complète du vecteur force dans l'espace (par exemple avec au moins trois couples mesurés selon des axes d'orientation différente définissant un système de référence en trois dimensions).

Par ailleurs, plusieurs forces ou pressions appliquées simultanément peuvent être mesurées par le procédé selon l'invention, pour autant que le nombre et la disposition des capteurs de couple le permette.

Même si le nombre et la disposition des capteurs de couple ne permet pas d'obtenir une description complète du vecteur force, il est toujours possible de calculer une force, dès lors que le vecteur force n'est pas en intersection avec tous les axes de mesure.

Dans ce cas, on peut calculer une représentation de la force correspondant à une projection du vecteur force selon des degrés de liberté disponibles, ou en d'autres termes une représentation de la force correspondant à au moins une composante spatiale de cette force.

A la limite, avec un seul capteur de couple, on peut déterminer une mesure de la force correspondant à une projection du vecteur force dans une direction perpendiculaire à la fois à l'axe de mesure et au segment joignant le point d'application et cet axe de mesure. Cette information est déjà très utile et exploitable, surtout en regard de la simplicité des moyens de mesure mis en oeuvre.

Ainsi, suivant des modes d'implémentation du procédé selon l'invention mettant en oeuvre une pluralité de capteurs de couple avec des axes de mesure distincts, l'étape de détermination de la force peut comprendre une détermination d'au moins une composante spatiale de la force selon un axe de référence ou dans un plan de référence.

De manière générale, les composantes spatiales de la force peuvent être déterminées par une technique de résolution de systèmes d'équations par approximation ou minimisation de fonction d'erreur, telle que par exemple par moindres carrés et/ou par factorisation de Cholesky.

Dans un mode d'implémentation du procédé selon l'invention, mettant en oeuvre au moins deux capteurs de couple configurés pour mesurer au moins deux couples, suivant respectivement au moins un premier axe de mesure et un deuxième axe de mesure distincts et parallèles entre eux, l'étape de détermination de la force peut comprendre une détermination de deux composantes spatiales de la force dans un plan de référence perpendiculaire auxdits premiers et deuxièmes axes de mesure.

Dans un mode d'implémentation mettant en oeuvre en outre au moins un troisième capteur de couple configuré pour mesurer un couple suivant un troisième axe de mesure, d'orientation différente des, ou perpendiculaire aux, premiers et deuxièmes axes de mesure, l'étape de calcul peut comprendre en outre une détermination d'une composante de la force suivant un axe de référence perpendiculaire au plan de référence.

Ces configurations peuvent être par exemple implémentées dans un robot de type bras manipulateur, avec une pluralité de segments reliés par des articulations dont au moins une partie ont des axes parallèles, l'ensemble étant mobile en rotation par rapport une base autour d'un axe de rotation perpendiculaire à au moins une partie des axes des articulations.

Suivant des modes d'implémentation du procédé selon l'invention, au moins un couple suivant un axe de mesure peut être :

- mesuré par un capteur de couple configuré pour mesurer ledit couple suivant ledit axe de mesure ; ou
- calculé à partir d'au moins deux mesures de couples suivant des axes différents dudit axe de mesure, réalisées par au moins deux capteurs de couple, qui peuvent constituer dans ce cas un capteur de couple équivalent selon un axe de mesure.

Suivant une caractéristique avantageuse, le procédé selon l'invention peut en outre comprendre, pour au moins un contact, une étape de détermination d'une pression exercée par ledit contact, en fonction de l'étendue de contact.

Dans ce cas, l'étape d'exécution d'une commande de contrôle peut prendre en compte ladite pression générée par ledit contact.

Ainsi, le procédé selon l'invention permet d'augmenter encore plus le champ d'interactivité, et le registre de commandes possibles, à partir d'un contact d'un objet de commande avec une surface du robot. En effet, pour un contact donné il est possible de générer différentes commandes en fonction d'une part de l'étendue de contact, d'autre part de la pression exercée lors dudit contact.

L'étape d'exécution d'une commande de contrôle peut ainsi prendre en compte le couple et/ou la force et/ou la pression exercée par ledit contact.

Suivant des exemples de mise en oeuvre, l'étape d'exécution d'une commande de contrôle peut comprendre :

- une mise à l'arrêt, ou une mise en mouvement, d'au moins une partie du robot ; ou
- un déplacement d'au moins une partie du robot avec une vitesse, éventuellement dépendant d'une information relative à au moins une étendue de contact ; ou
- un déplacement d'au moins une partie du robot dans une direction, éventuellement dépendant de la position d'au moins un point de contact et/ou de la direction d'application (ou des composantes spatiales ou vectorielles) de la force en au moins un point de contact ; ou
- un changement de mode de fonctionnement du robot, par exemple entre un mode de fonctionnement autonome et un mode de fonctionnement asservi ou compliant.

Suivant un exemple de mise en oeuvre, le robot, par exemple en mode de fonctionnement autonome où il exécute des tâches prédéfinies, peut s'arrêter à l'approche d'un objet de commande, selon une procédure de sécurité anticollision. Puis en fonction du contact, et en particulier de l'information de l'étendue de contact, exécuter une commande de contrôle consistant à se déplacer, en particulier à une vitesse fonction de la surface de l'étendue de contact, dans un mode de fonctionnement asservi ou compliant.

Le robot en mode de fonctionnement autonome peut par exemple ralentir à l'approche d'un objet de commande, selon une procédure de sécurité, puis :

- si un contact avec une étendue de contact large, par exemple supérieure à une surface prédéterminée, est détectée, exécuter une commande de contrôle consistant à s'arrêter, selon une procédure de sécurité anticollision ;
- si un contact avec une étendue de contact petite, par exemple inférieure à une surface prédéterminée, est détectée, exécuter une commande de contrôle consistant à se déplacer à une vitesse fixe, ou fonction de l'étendue de contact et/ou de la force et/ou de la pression exercée.

Il est à noter que la validation du contact avec les mesures de couple apporte une sûreté de fonctionnement supplémentaire, par exemple pour faire passer le robot d'un mode de fonctionnement autonome avec une sécurité anticollision à un mode de fonctionnement asservi ou compliant dans lequel les contraintes de la sécurité anticollision doivent être relâchées puisque le robot est autorisé à bouger malgré la proximité de l'objet de commande ou de l'opérateur. Il est en effet impératif pour la sécurité d'un opérateur que le robot ne passe pas en mode asservi de manière non voulue.

Au moins une caractéristique temporelle du contact et/ou de l'étendue du contact (appui long, court, « tap » successifs, variations temporelles de l'étendue de contact ...) peut également être prise en compte dans l'exécution des commandes de contrôle.

Ainsi, par exemple, deux tapotements successifs avec une étendue de contact petite (par exemple inférieure à une surface prédéterminée correspondant à des extrémités de doigts) peuvent déclencher ou exécuter une commande de contrôle consistant à faire entrer le robot dans un mode de fonctionnement asservi ou compliant dans lequel il se déplace en fonction de caractéristiques de contacts exercés (étendue, force, ...), et la même commande ou une autre peut le refaire passer dans un mode de fonctionnement autonome.

Suivant un exemple de mise en oeuvre :

- lorsqu'un objet en approche est détecté, le robot passe en mode de fonctionnement de sécurité, en s'arrêtant ou en ralentissant fortement sa vitesse ;
- lorsque deux tapotements successifs avec une étendue de contact inférieure à une surface prédéterminée, correspondant par exemple à des extrémités de doigts, sont détectés, le robot exécute une commande de contrôle comprenant un passage en mode de fonctionnement asservi ou compliant ;
- il se déplace alors en fonction de caractéristiques de contact exercées (localisation du point de contact, étendue de contact, force...), selon des commandes de contrôle ou d'autres commandes ;
- lorsque deux tapotements successifs avec une étendue de contact petite (comme due à des extrémités de doigts) sont de nouveau détectés, le robot exécute une commande de contrôle comprenant un passage en mode de fonctionnement autonome, pour exécuter les tâches programmées.

Il est également possible de prendre en compte un nombre et/ou disposition de points de contact, et/ou une forme d'une étendue de contact.

Une étendue de contact de forme allongée peut par exemple permettre de détecter que l'objet en contact est une main.

Une main peut aussi être détectée en détectant deux points de contacts avec un espacement prédéterminé, et des étendues de contact de faible surface.

La détection d'une main peut par exemple être utilisée pour faire passer le robot dans un mode de fonctionnement asservi ou compliant, dans lequel il se déplace en fonction notamment des positions de points de contact.

Il est bien entendu également possible de prendre en compte une position des points de contact.

Ainsi, par exemple, une commande de contrôle peut n'être déclenchée que si les points de contact avec l'objet de commande se trouvent dans une zone particulière de la surface du robot. Les modes de fonctionnement asservis ou compliants tel que décrits précédemment peuvent par exemple n'être déclenchés que si un objet de contrôle tel qu'une main est détectée dans une zone dite de manipulation du robot, par exemple au niveau du segment distal, ou du porte-outil ou de la tête fonctionnelle, d'un bras robotisé.

Par exemple :

- lorsqu'un objet en approche est détecté, le robot passe en mode de fonctionnement de sécurité, en s'arrêtant ou en ralentissant fortement sa vitesse ;
- lorsque deux points de contact avec une étendue de contact inférieure à une surface prédéfinie (correspondant par exemple à des extrémités de doigts) sont détectés, le robot passe en mode de fonctionnement asservi ou compliant selon une commande de contrôle ;
- Il se déplace alors en fonction de caractéristiques de contact exercées (localisation des points de contact, étendue(s) de contact, force exercée, ...) ;

- lorsque l'objet de commande interrompt le contact, éventuellement après un délai, le robot repasse en mode de fonctionnement autonome.

Suivant un autre aspect de l'invention, il est proposé un dispositif de contrôle pour contrôler un robot, comprenant au moins un module, dit de contrôle, configuré pour mettre en oeuvre toutes les étapes du procédé selon l'une quelconque des revendications 1-9.

Le module de commande peut être, au moins en partie, un module électronique comprenant des composants analogiques, ou des composants numériques, ou encore une combinaison de composants analogiques et de composants numériques.

Le module de commande peut être, au moins en partie, un programme informatique, ou des instructions informatiques, exécuté(es) par un calculateur, un processeur, une puce électronique, etc.

Suivant un autre aspect de l'invention, il est proposé un robot comprenant :

- au moins un capteur, dit de position, agencé pour détecter au moins un contact d'un objet avec le robot ; et
- au moins un dispositif de contrôle selon l'invention.

Le robot selon l'invention peut en outre comprendre au moins un capteur de couple agencé pour mesurer au moins un couple exercé sur une partie du robot suivant au moins un axe, dit de mesure.

Comme décrit précédemment, le robot peut comprendre une pluralité de capteurs de couple avec des axes de mesure distincts.

En particulier, le robot peut comprendre au moins deux capteurs de couple configurés pour mesurer au moins deux couples, suivant respectivement au moins un premier axe de mesure et un deuxième axe de mesure distincts et parallèles entre eux. Optionnellement, le robot peut comprendre au moins un troisième capteur de couple configuré pour mesurer un couple suivant un troisième axe de mesure, d'orientation différente des, ou perpendiculaire aux, premiers et deuxièmes axes de mesure.

Dans un mode de réalisation du robot selon l'invention, au moins un capteur de couple, en particulier chaque capteur de couple, peut être agencé au niveau d'une articulation.

Au moins un capteur de couple peut se trouver intégré au robot ailleurs qu'au niveau d'une articulation.

Au moins un capteur de couple peut comprendre :

- un capteur de courant électrique et/ou de tension électrique prévu pour mesurer un courant électrique et/ou une tension électrique dans un actuateur ou un moteur au niveau d'une articulation du robot, ce qui permet d'obtenir une information sur le couple ou plus généralement l'effort exercé par l'actuateur, et/ou
- un capteur de couple prévu pour mesurer au moins un couple, suivant au moins un axe de mesure sensiblement confondu avec un axe de rotation d'une articulation du robot, et/ou
- un capteur de contrainte ou de couple statique prévu pour mesurer au moins une contrainte résultant en un couple suivant au moins un axe de mesure.

Suivant des modes de réalisation bien connus, le ou les capteurs de couple peuvent réaliser, par exemple, une mesure d'une force ou d'une contrainte (par exemple avec des jauges de contraintes) qui exerce un moment sur l'axe de mesure du capteur.

Au moins un capteur de couple peut être :

- un capteur de couple prévu pour mesurer un seul couple suivant un seul axe de mesure, et/ou
- un capteur de couple multiaxial pour mesurer au moins deux couples suivant deux axes de mesure différents.

L'au moins un capteur de position peut comprendre au moins une électrode de mesure capacitive agencée au niveau d'au moins une partie de la surface dudit robot.

L'au moins un capteur de position peut comprendre en outre une électronique de détection capacitive pour détecter un signal relatif au couplage capacitif entre au moins une électrode de mesure capacitive et au moins un objet.

Une telle électronique de détection capacitive peut être configurée pour détecter un contact, et éventuellement une approche, d'un objet.

Suivant des modes de mise en oeuvre en « mutual capacitance », l'électronique de détection est agencée pour :

- d'une part, fournir aux électrodes d'excitation un potentiel alternatif, dit de détection, différent d'un potentiel de masse, à une fréquence de détection ; et
- d'autre part, mesurer/détecter sur les électrodes de mesure un signal relatif au couplage capacitif avec les électrodes d'excitation, éventuellement modifié par le couplage capacitif électrode-objet à mesurer, de sorte à en déduire le signal de mesure relatif à une capacité de couplage entre l'électrode de mesure et l'objet.

Suivant d'autres modes de mise en oeuvre en « self capacitance », l'électronique de détection capacitive peut comprendre une électronique de mesure agencée pour :

- d'une part, fournir aux électrodes de mesure un potentiel alternatif, dit de détection, différent d'un potentiel de masse, à une fréquence de détection ; et
- d'autre part, mesurer/détecter un signal relatif au couplage capacitif électrode-objet.

Suivant un exemple de réalisation, l'électronique de mesure peut comprendre un amplificateur opérationnel (AO), ou un circuit réalisant un amplificateur opérationnel, fonctionnant en amplificateur de transimpédance ou de charge, dont :

- une première entrée, par exemple inverseuse, est reliée à une ou des électrodes de mesure, directement ou par l'intermédiaire d'un moyen de scrutation optionnelle par exemple ;
- une deuxième entrée, par exemple non inverseuse, est reliée à un oscillateur fournissant le potentiel de détection ; et
- la sortie est rebouclée sur ladite première entrée par l'intermédiaire d'une impédance, et en particulier d'une capacité.

Dans cette configuration, la sortie de l'AO fournit une tension $V_s$ dont l'amplitude est proportionnelle à la capacité électrode-objet, notée $C_{eo}$, entre au moins une électrode de mesure et l'objet.

La sortie de l'amplificateur opérationnel peut être reliée, directement ou indirectement, à un module de mesure de la tension $V_s$. Ce module de mesure de la tension $V_s$ peut comprendre un conditionneur, une démodulation telle qu'une démodulation synchrone à la fréquence de détection, ou une détection d'amplitude.

L'électronique de détection peut en outre comprendre au moins un module de calcul agencé pour déterminer un contact ou une information de contact, et éventuellement une distance ou une information de distance, entre au moins une électrode de mesure et l'objet, en fonction du signal relatif à la capacité de couplage $C_{eo}$.

Ce module de calcul peut par exemple comprendre ou être réalisé sous la forme d'un microcontrôleur, ou d'un FPGA.

Bien entendu, l'électronique de détection peut comprendre d'autres composants que ceux décrits.

L'électronique de détection peut être réalisée par des composants numériques, ou par des composants analogiques, ou encore par une combinaison de composants numériques et de composants analogiques.

Le robot selon l'invention, ou l'au moins un capteur de position, peut en outre comprendre au moins une électrode, dite de garde, polarisée à un potentiel, dit de garde, identique au potentiel de détection à la fréquence de détection.

Une telle au moins une électrode de garde vient protéger la ou les électrodes de mesure contre les capacités de fuite ou de couplage parasite, ou des perturbations, pouvant être causées par des parties de l'appareil, qui ne seraient pas au potentiel de détection, à la fréquence de détection. Ainsi, la portée et la précision de détection capacitive sont améliorées.

La ou les électrodes de garde peu(ven)t être disposée(s) sous la ou les électrodes de mesure, du côté opposé à la zone de détection des électrodes de mesure.

L'électronique de détection peut en outre comprendre un oscillateur fournissant le potentiel alternatif de détection, et le potentiel de garde le cas échéant.

Avantageusement, l'électronique de détection peut être, au moins en partie, référencée électriquement au potentiel de détection.

Suivant des modes de réalisation, le robot selon l'invention peut comprendre un bras articulé avec :

- au moins une articulation pourvue d'un capteur de couple, et
- au moins un capteur de position agencé sur une partie, en particulier la totalité, de la surface dudit robot.

Suivant des modes de réalisation, le robot selon l'invention peut comprendre en outre une tête fonctionnelle, ou une interface de fixation d'une tête fonctionnelle, équipée d'un capteur de couples avec plusieurs axes de mesure.

Il peut également comprendre une tête fonctionnelle équipée d'au moins un capteur de position.

La tête fonctionnelle peut être équipée d'électrodes de mesure capacitives, et/ou comprendre des parties utilisées comme électrodes de détection capacitive.

Suivant des modes de réalisation, le robot selon l'invention peut être de type humanoïde.

Bien entendu, le robot selon l'invention peut également être de tout autre type, tel qu'un robot médical, un véhicule autonome, ...

# EP 3 846 982 B1

## DESCRIPTION DES FIGURES ET MODES DE REALISATION

D'autres avantages et caractéristiques apparaîtront à l'examen de la description détaillée d'exemples de réalisation nullement limitatifs, et des dessins annexés sur lesquels :

- la FIGURE 1 est une représentation schématique d'un premier exemple de réalisation non limitatif du procédé selon l'invention ;
- la FIGURE 2 est une représentation schématique d'un deuxième exemple de réalisation non limitatif du procédé selon l'invention ;
- la FIGURE 3 est une représentation schématique d'un exemple de réalisation non limitatif d'un capteur capacitif pouvant être utilisé comme capteur de position ;
- les FIGURES 4a et 4b sont des représentations schématiques de deux exemples non limitatifs de détermination d'une étendue de contact pouvant être mis en oeuvre dans la présente invention ;
- la FIGURE 5 est une représentation schématique d'un exemple de réalisation non limitatif d'un dispositif selon l'invention ;
- la FIGURE 6 est une représentation schématique d'un exemple de réalisation non limitatif d'un robot selon l'invention ; et
- la FIGURE 7 est une représentation schématique d'un exemple non limitatif de détermination d'une force, à partir de mesures de couples, pour le robot de la FIGURE 6.

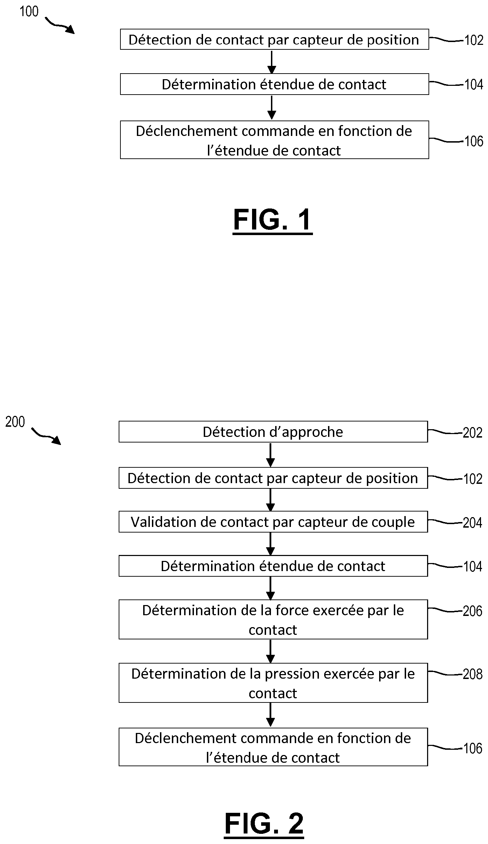

La FIGURE 1 est une représentation schématique d'un premier exemple de réalisation non limitatif du procédé selon l'invention.

Le procédé 100 est prévu pour être mis en oeuvre dans un robot comprenant au moins un capteur, dit de position, réalisant une détection de contact, et éventuellement une détection d'approche, d'un objet sur une surface du robot. Préférentiellement, le capteur de position comprend une multitude d'éléments senseurs recouvrant une partie ou la totalité de la surface externe du robot.

Le procédé 100 comprend une étape 102 de détection d'un contact (ou d'une pluralité de contacts) entre un objet et une surface du robot. Cette détection de contact est réalisée par le capteur de position, par exemple en fonction d'une valeur du signal détecté.

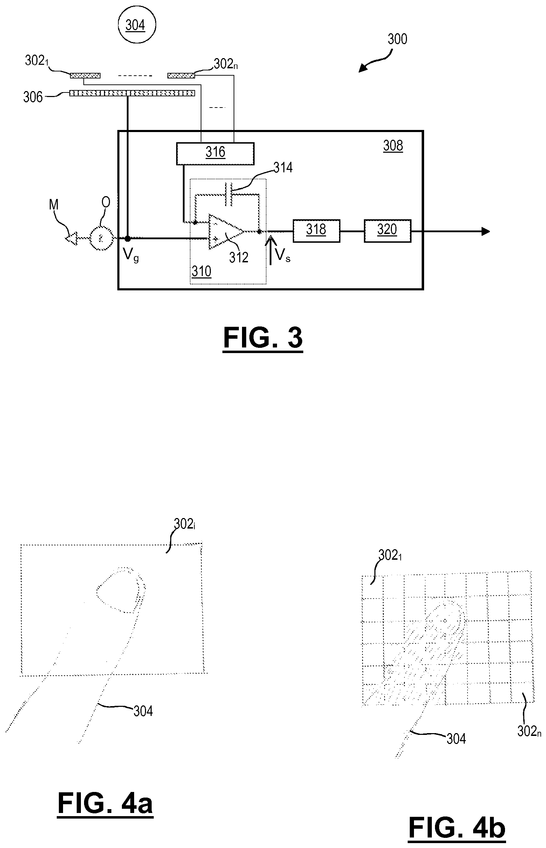

Suite à la détection de contact, le procédé 100 comprend une étape 104 de détermination de l'étendue du contact détecté, pour au moins l'un des contacts détectés. Cette étendue de contact correspond à la surface de contact entre l'objet et le robot, et/ou à la forme de cette surface de contact. Cette étendue de surface est préférentiellement calculée en fonction du ou des signaux retournés par le ou les éléments senseurs du capteur de position. Des exemples de détermination d'une étendue de contact sont décrits plus loin en référence aux FIGURES 4a et 4b.

Puis, lors d'une étape 106, une commande de contrôle est générée et exécutée par le robot. Cette commande est fonction notamment de l'étendue de contact déterminée lors de l'étape 104. Elle peut bien entendu être dépendante, ou son déclenchement être dépendant, d'autres paramètres tels que la localisation et/ou le nombre de contacts détectés.

Ainsi, le procédé 100 permet de déclencher différentes commandes de contrôle, et/ou de décider de déclencher ou non une commande de contrôle, en fonction notamment de l'étendue de contact entre un objet et le robot.

Ces commandes de contrôle peuvent comprendre, de manière non limitative, les exemples de commandes de contrôle décrits précédemment.

La FIGURE 2 est une représentation schématique d'un deuxième exemple de réalisation non limitatif du procédé selon l'invention.

Le procédé 200 est prévu pour être mis en oeuvre dans un robot comprenant au moins un capteur de position et au moins un capteur de couple pour mesurer la valeur d'un couple généré par un contact sur une partie du robot.

Le procédé 200 comprend toutes les étapes du procédé 100 de la FIGURE 1.

Le procédé 200 comprend, en plus, avant l'étape 102, une étape 202 de détection d'approche. Cette détection d'approche est réalisée en fonction d'au moins un signal mesuré par le capteur de position, en particulier lorsque le capteur de position est un capteur capacitif. Ainsi, l'objet est détecté lorsqu'il est en approche du robot, avant d'entrer en contact avec le robot.

Le procédé 200 comprend ensuite l'étape 102 de détection de contact.

Le procédé 200 comprend en outre, après l'étape 102, une étape 204 de validation d'un contact en fonction de la mesure réalisée par au moins un capteur de couple. Pour ce faire, une mesure de couple est réalisée par au moins un capteur de couple. La valeur mesurée est comparée à une valeur de couple de référence, préalablement déterminée et correspondant à une absence de contact. Si le couple mesuré est supérieur à la valeur de référence, alors le contact est validé. Sinon, le contact n'est pas validé.

L'étape 204 est suivie de l'étape 104 de détermination de l'étendue de contact.

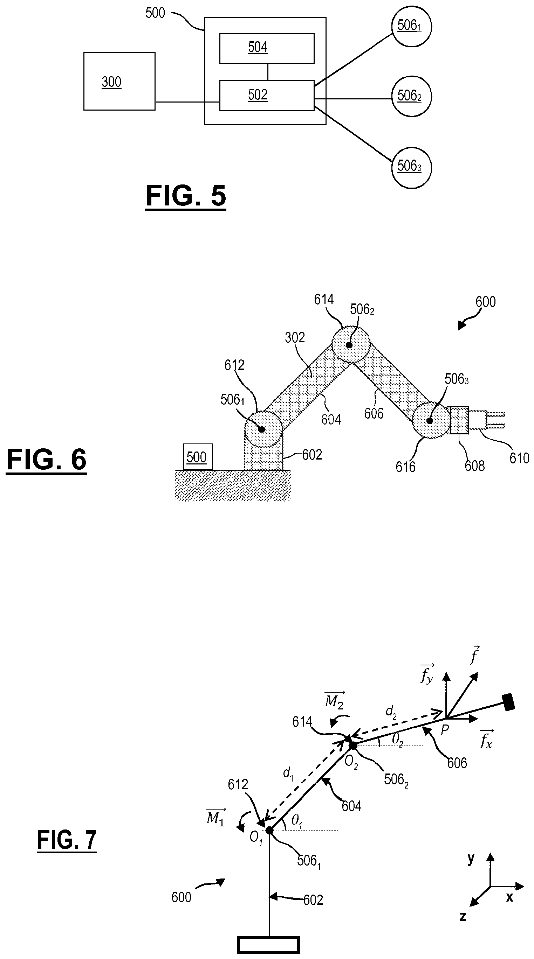

Le procédé 200 comprend, après l'étape 104, une étape 206 optionnelle de détermination d'une force appliquée par le contact en fonction du couple mesuré par le(s) capteur(s) de couple et du modèle géométrique du robot. Un exemple de calcul de force à partir des mesures de couple est décrit plus loin en référence à la FIGURE 7.

De plus, le procédé 200 peut comprendre une étape 208 de détermination d'une pression appliquée par le contact en fonction de l'étendue de contact et de la force appliquée par le contact.

Enfin, le procédé comprend l'étape 106 de déclenchement d'une commande de contrôle pour le robot. Dans le cadre du procédé 200, la commande déclenchée lors de l'étape 106 est fonction de l'étendue de contact, et optionnellement du couple et/ou de la force et/ou de la pression, du(es) au contact détecté.

Ainsi, le procédé 200 permet, pour une étendue de contact donnée, de déclencher différentes commandes de contrôle en fonction du couple, de la force et/ou de la pression appliqué(es) par le contact.

Ces commandes de contrôle peuvent comprendre, de manière non limitative, les exemples de commandes de contrôle décrits précédemment.

La FIGURE 3 est une représentation schématique d'un exemple de réalisation non limitatif d'un capteur capacitif pouvant être utilisé comme capteur de position.

Le capteur 300, représenté sur la FIGURE 3, comprend une multitude d'électrodes capacitives $302_1$-$302_n$, dites électrodes de mesure, prévues pour détecter un objet 304, qui peut être par exemple un doigt ou une main d'un opérateur. Les électrodes de mesure $302_1$-$302_n$ peuvent être également désignées par la référence 302, ou la référence $302_i$, dans la suite. Les électrodes de mesure $302_i$ sont des éléments senseurs du capteur capacitif 300.

Le capteur capacitif 300 comprend préférentiellement, une ou plusieurs électrodes 306, dite de garde, optionnelles, pour garder électriquement les électrodes de mesure 302.

Le capteur 300 comprend aussi une électronique de détection 308 pour d'une part polariser les électrodes de mesure 302 et de garde 306 à un même potentiel alternatif différent d'un potentiel de masse à une fréquence de détection, et d'autre part mesurer un signal relatif à la capacité de couplage entre au moins une électrode de mesure 302 et l'objet 304.

L'électronique de détection 308 peut être réalisée sous une forme analogique ou numérique, ou une combinaison analogique/numérique.

Le capteur capacitif 300 peut être relié à un oscillateur O délivrant une tension alternative, notée $V_G$, et référencé à un potentiel de masse M.

La tension $V_G$ est utilisée comme potentiel de garde pour polariser une ou des électrodes de garde 306 par l'intermédiaire d'une ligne ou plusieurs lignes, et comme potentiel d'excitation ou de détection pour polariser des électrodes de mesure 302. Elle comprend donc au moins une composante spectrale à la fréquence de détection utilisée par l'électronique de détection 308.

L'électronique de détection 308 comprend un amplificateur de courant, ou de charge, 310 représenté par un amplificateur opérationnel (AO) 312 et une capacité de contre-réaction 314 rebouclant la sortie de l'AO 312 à l'entrée inverseuse « - » de l'AO 312.

De plus, dans l'exemple représenté, l'entrée non-inverseuse « + » de l'AO 312 reçoit la tension $V_G$ et l'entrée inverseuse « - » de l'AO 312 est prévue pour être reliée à chaque électrode de mesure $302_i$ par l'intermédiaire d'un moyen de scrutation 316, qui peut être par exemple un switch, de sorte à interroger individuellement à tour de rôle les électrodes de mesure 302.

L'utilisation du moyen de scrutation 316 est, bien entendu, optionnelle.

Dans ces conditions, l'amplificateur de charge 310, et en particulier l'AO 312, fournit en sortie une tension $V_S$ à la fréquence de détection et d'amplitude proportionnelle à la capacité de couplage $C_{eo}$, dite capacité électrode-objet, entre une ou plusieurs électrodes de mesure 302 reliée à son entrée « - » et l'objet 304.

L'électronique de détection 308 peut en outre comprendre un conditionneur 318 permettant d'obtenir un signal représentatif de la capacité de couplage $C_{eo}$ recherchée. Ce conditionneur 318 peut comprendre, par exemple, un démodulateur synchrone pour démoduler le signal par rapport à une porteuse, à la fréquence de détection. Le conditionneur 318 peut également comprendre un démodulateur asynchrone ou un détecteur d'amplitude. Ce conditionneur 318 peut, bien entendu, être réalisé sous une forme analogique et/ou numérique (microprocesseur) et comprendre tous moyens nécessaires de filtrage, de conversion, de traitement, etc.

Le conditionneur 318 mesure et fournit la valeur de la tension $V_S$.

L'électronique de détection 308 peut en outre comprendre un module de calcul 320 agencé pour déterminer un contact ou une information de contact, et éventuellement une distance ou une information de distance, entre au moins une électrode de mesure 302 et l'objet, en fonction du signal relatif à la capacité de couplage $C_{eo}$ issu du conditionneur 318.

Ce module de calcul 320 peut par exemple comprendre ou être réalisé sous la forme d'un microcontrôleur, ou d'un FPGA.

Bien entendu, l'électronique de détection 308 peut comprendre d'autres composants que ceux décrits.

L'électronique de détection 308, ou au moins sa partie sensible avec l'amplificateur de charge 310 peut être référencée (ou alimentée par des alimentations électriques référencées) au potentiel de garde $V_G$, pour minimiser les capacités parasites.

L'électronique de détection 308 peut également être référencée, de manière plus classique, au potentiel de masse M.

La FIGURE 4a est une représentation schématique d'un premier exemple de détermination d'une étendue de contact entre un objet et un robot mettant en oeuvre un capteur capacitif en tant que capteur de position.

Dans l'exemple représenté sur la FIGURE 4a, le capteur mis en oeuvre peut être le capteur 300 de la FIGURE 3 et l'objet venant au contact est un doigt de l'utilisateur.

De plus, dans la configuration représentée sur la FIGURE 4a, la taille d'une électrode de mesure $302_i$ est suffisamment grande de sorte que l'étendue de contact entre le doigt 304 et le robot est plus petite que la surface de ladite électrode de mesure $302_i$. Par simplicité, dans l'exemple illustré, on considère que le doigt 304 n'est en contact qu'avec une seule électrode de mesure $302_i$.

Dans ces conditions, la surface de l'étendue de contact, notée $E_c$, peut être déterminée en fonction du signal fourni par l'électrode de mesure $302_i$ et d'un signal de mesure nominal préalablement déterminé, en utilisant la relation suivante :

$$E_c = \text{(Signal de mesure)}/\text{(signal de mesure nominal)} \times \text{(Surface totale de l'électrode de mesure } 302_i).$$

Le signal de mesure nominal correspond au signal de mesure obtenu avec un objet 304 en contact avec la totalité de la surface de l'électrode $302_i$, tel que déterminé par exemple par calibrage et/ou calcul.

La FIGURE 4b est une représentation schématique d'un deuxième exemple de détermination d'une étendue de contact entre un objet et un robot mettant en oeuvre un capteur capacitif en tant que capteur de position.

Dans l'exemple représenté sur la FIGURE 4b, le capteur mis en oeuvre peut être le capteur capacitif 300 de la FIGURE 3 et l'objet venant au contact est un doigt de l'utilisateur.

De plus, dans la configuration représentée sur la FIGURE 4b, la taille d'une électrode mesure $302_i$ est suffisamment petite de sorte que l'étendue de contact entre le doigt 304 et le robot recouvre plusieurs électrodes de mesure 302.

Dans ces conditions, l'étendue de contact, notée $E_c$, peut être déterminée en identifiant les électrodes de mesure signalant un contact avec le doigt 304, puis en déterminant la surface du robot couverte par lesdites électrodes de mesure en fonction de leur position, et/ou de la distance qui les sépare, et/ou de la taille de chaque électrode de mesure, etc. On peut ainsi déterminer la surface et la forme de l'étendue de contact.

Suivant un exemple de réalisation non limitatif, la surface de l'étendue de contact est déterminée en calculant la surface totale des électrodes de mesure détectant le contact, en y ajoutant éventuellement l'espace se trouvant entre ces électrodes de mesure. La forme est déterminée à partir de la disposition géométrique et la taille des électrodes.

Bien entendu, il est possible de déterminer une étendue de contact et en particulier sa surface de manière plus précise en calculant des surfaces de recouvrement partielles d'électrodes tel qu'exposé en relation avec la FIGURE 4a.

La FIGURE 5 est une représentation schématique d'un exemple de réalisation non limitatif d'un dispositif de contrôle selon l'invention.

Le dispositif de contrôle 500, représenté sur la FIGURE 5 comprend un module de calcul 502 et un module de commande 504.

Le module de calcul 502 est relié au capteur de position, tel que par exemple le capteur capacitif 300 de la FIGURE 3. A partir des signaux reçus par ledit capteur de position, le module de calcul 502 détermine l'étendue, et la position, d'un contact.

Le module de calcul 502, peut optionnellement être relié au moins, un, en particulier trois, capteurs de couple $506_1$-$506_3$, équipant le robot et prévu pour réaliser une mesure de couple suivant au moins un axe de mesure, et en particulier trois axes de mesure. A partir des signaux reçus par le(s)dit(s) capteur(s) de couple $506_1$-$506_i$, le module de calcul 502 réalise :

- une validation, ou non, d'un contact signalé par le capteur de position 300 ;
- détermine la force, et/ou la pression, exercée par ledit contact.

L'étendue de contact, et éventuellement la force et la pression exercées par le contact, sont communiquée(s) au module de commande 504. Ce module de commande 504 détermine une commande à exécuter au sein du robot, en fonction de l'étendue de contact, et éventuellement de la force et/ou de la pression exercées par ledit contact.

La commande à exécuter est alors transmise à un module de commande du robot, ou directement aux actionneurs du robot.

Alternativement à ce qui est représenté sur la FIGURE 5, les modules 502 et 504 peuvent être intégrés dans un même module.

De plus, chaque module peut être réalisé par des composants analogiques et/ou numériques, ou par des instructions informatiques exécutées par un processeur ou une puce électronique par exemple.

En outre, le dispositif 500 peut intégrer d'autres éléments que ceux indiqués. Par exemple, le dispositif 500 peut intégrer une partie d'une électronique de détection capacitive, telle que par exemple l'électronique de détection capacitive 308 de la FIGURE 3.

Alternativement, le dispositif 500 peut être intégré dans une partie de l'électronique de détection capacitive 308 de la FIGURE 3.

La FIGURE 6 est une représentation schématique d'un exemple de réalisation non limitatif d'un robot selon l'invention.

Le robot 600, représenté sur la FIGURE 6, est un bras robotisé tel qu'un robot collaboratif industriel travaillant sous la surveillance, ou en collaboration avec, un opérateur, ou encore un robot médical en vue d'une intervention sur le corps d'une personne, ou encore un robot d'assistance à la personne.

Le bras robotisé 600 comprend un segment fixe 602, trois segments articulées 604-608 et une tête fonctionnelle 610 fixée au segment articulé 608. La tête fonctionnelle 610, représenté sur la FIGURE 6, est (de manière non limitative) une pince munie d'un moteur électrique (non représenté).

Le bras robotisé 600 comprend trois articulations 612-616, en particulier motorisées, permettant d'orienter les segments 604-608 selon la configuration souhaitée.

Chaque segment 602-608 est équipé d'électrodes de mesures 302 pour réaliser une détection capacitive d'objets se trouvant dans l'environnement du robot 600, en particulier déposées dans/sur la coque extérieure dudit segment.

Chaque articulation 612-616 est équipée d'un capteur de couple, tel que par exemple les capteurs de couples $506_1$-$506_3$ permettant de mesurer le couple par rapport à un axe de mesure prédéterminé.

Le bras robotisé 600 comprend également un dispositif de contrôle selon l'invention, et en particulier le dispositif de contrôle 500 de la FIGURE 5.

La FIGURE 7 est une représentation schématique d'un exemple non limitatif de calcul d'une force et/ou d'une pression pour le robot 600 de la FIGURE 6.

Pour une meilleure illustration, le robot 600 est représenté par un schéma simplifié. De plus, dans l'exemple de la FIGURE 7, il est considéré que le contact a lieu sur le segment 606 du robot 600. L'articulation 616, le segment 608 et la tête fonctionnelle 610 ne sont pas représentés sur la FIGURE 7 .

Pour ne pas alourdir inutilement les développements, seuls les capteurs de couples $506_1$ et $506_2$ sont considérés. Le capteur de couple $506_3$ n'est considéré et n'est pas non plus représenté sur la FIGURE 7.

Le robot 600 est dans une configuration définie par les angles $\theta_1$ et $\theta_2$ des articulations 612 et 614, respectivement. Les angles $\theta_1$ et $\theta_2$ peuvent être déterminés par exemple par des codeurs angulaires dans les articulations 612 et 614.

La position d'application P du contact est déterminée en fonction des signaux fournis par le capteur de position, et en particulier par les électrodes de mesure 302. La position P correspond à la position de la force $\vec{f}$, appliquée par le contact.

Connaissant la position P, la distance $d_2$ de la force $\vec{f}$ par rapport à l'articulation 614 est déterminée. La distance $d_1$ entre les articulations 612 et 614 est une caractéristique également connue du robot 600, par exemple en utilisant un modèle géométrique de ce dernier.

De plus, les couples $\overrightarrow{M_1}$ et $\overrightarrow{M_2}$ générés, respectivement au niveau des articulations 612 et 614, sont mesurés par les capteurs de couple, respectivement les capteurs $506_1$ et $506_2$.

Les couples $\overrightarrow{M_1}$ et $\overrightarrow{M_2}$ sont générés par la force $\vec{f}$ par les relations suivantes :

$$\begin{cases} \overrightarrow{M_1} = \overrightarrow{O_1P} \wedge \vec{f} \\ \overrightarrow{M_2} = \overrightarrow{O_2P} \wedge \vec{f} \end{cases}$$

Les segments ou les vecteurs $\overrightarrow{O_1P}$ et $\overrightarrow{O_2P}$ sont définis de sorte à couper les axes de mesure respectifs des mesures de couples $\overrightarrow{M_1}$ et $\overrightarrow{M_2}$ aux points $O_1$ et $O_2$, en étant perpendiculaires à ces axes de mesure. Les couples $\overrightarrow{M_1}$ et $\overrightarrow{M_2}$ s'expriment donc comme un produit vectoriel de ces segments et de la force $\vec{f}$.

Les couples $\overrightarrow{M_1}$ et $\overrightarrow{M_2}$ s'expriment en fonction des composants $\vec{f_x}$ et $\vec{f_y}$ de la force $\vec{f}$ comme suit :

$$\begin{cases} M_1 \mathbf{z} = \begin{pmatrix} d_1 \cos\theta_1 + d_2 \cos\theta_2 \\ d_1 \sin\theta_1 + d_2 \sin\theta_2 \end{pmatrix} \wedge \begin{pmatrix} f_x \\ f_y \end{pmatrix} \\ \qquad M_2 \mathbf{z} = \begin{pmatrix} d_2 \cos\theta_2 \\ d_2 \sin\theta_2 \end{pmatrix} \wedge \begin{pmatrix} f_x \\ f_y \end{pmatrix} \end{cases}$$

En conséquence, les composantes $\vec{f_x}$ et $\vec{f_y}$ respectivement suivant les axes **x** et **y** s'expriment par les relations suivantes :

$$\begin{cases} M_1 = f_y(d_1 \cos\theta_1 + d_2 \cos\theta_2) - f_x(d_1 \sin\theta_1 + d_2 \sin\theta_2) \\ \qquad M_2 = f_y \, d_2 \cos\theta_2 - f_x \, d_2 \sin\theta_2 \end{cases} \quad \dots(1)$$

Ainsi, les composantes $\vec{f_x}$ et $\vec{f_y}$ de la force $\vec{f}$ peuvent être déterminées par résolution du système d'équation (1).

Dans l'exemple présenté, les axes de mesure des couples $\vec{M_1}$ et $\vec{M_2}$ sont parallèles. Ils permettent de calculer deux composantes $\vec{f_x}$ et $\vec{f_y}$ de la force $\vec{f}$ suivant les axes **x** et **y** d'un système de référence inclus dans un plan perpendiculaire à ces axes de mesure. En d'autres termes, on peut ainsi calculer une projection du vecteur force $\vec{f}$ dans ce plan.

Ce raisonnement peut être étendu à 3 dimensions. Ainsi, si l'on dispose d'au moins 3 capteurs de couple avec des axes de rotation disposés de telle sorte que la force $\vec{f}$ appliquée au point $P$ ait une composante non-nulle dans le plan perpendiculaire à chacun de ces axes et sans intersection avec ces axes, on peut mesurer son amplitude et son orientation dans l'espace.

Ainsi, dans le cas du bras robotisé illustré à la FIGURE 6, en utilisant également un capteur de couple dont l'axe de mesure est perpendiculaire aux axes de mesure des couples $\vec{M_1}$ et $\vec{M_2}$, on peut déterminer également la composante $\vec{f_z}$ de la force suivant un axe **z** perpendiculaire aux axes **x** et **y.**

La meilleure sensibilité et uniformité de détection dans l'espace est bien entendu atteinte avec au moins trois axes de mesure du couple perpendiculaires entre eux.

Si le robot dispose de plus de capteurs de couple, la force peut bien entendu être déterminée avec plus de précision par des techniques de minimisation de fonctions d'erreur (moindres carrés, ...).

Cela est d'autant plus vrai lorsque l'opérateur manipule par exemple un outil en bout du bras robotisé 600, tel que la tête fonctionnelle 610. En outre, dans ce cas on peut aisément insérer un capteur de couple multi-axes au niveau de la fixation de la tête fonctionnelle 610 sur le segment 608.

Une redondance en termes de mesures de couples peut être également utilisée pour détecter des défaillances, en cas par exemple de mesures incohérentes.

Il est à noter que dans la mesure où il est possible de mesurer le vecteur force, il est également possible de déterminer la direction d'application d'une force $\vec{f}$ même si elle n'est pas perpendiculaire à la surface du robot au point d'application, ce qui est très difficile avec des capteurs de pression locaux.

L'invention permet ainsi de détecter et caractériser tout type de force exercée sur le robot, y compris des forces tangentielles à la surface ou même de traction. Elle permet ainsi d'obtenir plus d'information qu'avec des capteurs de pression locaux.

Cette information peut être utilisée par exemple, comme expliqué précédemment, pour permettre des interactions riches entre un opérateur et un robot, par des commandes gestuelles, et/ou un guidage précis y compris en traction.

Bien sûr, l'invention n'est pas limitée aux exemples qui viennent d'être décrits et de nombreux aménagements peuvent être apportés à ces exemples sans sortir du cadre de l'invention.

**Revendications**

1. Procédé (100;200) pour contrôler un robot (600), comprenant les étapes suivantes :

   - détection (102) d'au moins un contact entre un objet (304) et le robot (600), au moyen d'au moins un capteur (300), dit de position, équipant ledit robot (600) ;
   - détermination (104), pour ledit au moins un contact, d'une étendue de contact en fonction d'une mesure de l'au moins un capteur de position (300) ; et
   - exécution (106) d'une commande de contrôle du robot prenant en compte une information relative à ladite étendue de contact.

   **caractérisé en ce que** l'au moins un capteur de position (300) comprend au moins une électrode de mesure capacitive (302) agencée pour fournir un signal de mesure relatif à une capacité de couplage entre ladite électrode de mesure (302) et l'objet (304), la détection de contact prenant en compte ledit signal de mesure.

2. Procédé (100;200) selon la revendication précédente, **caractérisé en ce que** la détermination de l'étendue de contact prend en compte un signal fourni par une électrode de mesure capacitive (302), un signal de mesure nominal préalablement déterminé, et la surface de ladite électrode de mesure (302).

3. Procédé (100;200) selon l'une quelconque des revendications 1 ou 2, **caractérisé en ce que**, lorsque le contact est détecté par plusieurs électrodes de mesure capacitives (302), l'étendue de contact est déterminée en prenant en compte la surface couverte par lesdites électrodes de mesure capacitives (302) détectant ledit contact.

4. Procédé (200) selon l'une quelconque des revendications précédentes, **caractérisé en ce qu'**il comprend en outre une étape (204) de mesure d'un couple suivant au moins un axe, dit de mesure, par au moins un capteur de couple ($506_1$-$506_3$) équipant le robot (600).

5. Procédé (200) selon la revendication précédente, **caractérisé en ce qu'**il comprend en outre une étape (204) de validation d'un contact d'un objet avec le robot, en utilisant au moins une mesure de couple.

6. Procédé (200) selon l'une quelconque des revendications 4 ou 5, **caractérisé en ce qu'**il comprend en outre, pour au moins un contact, une étape (206) de détermination d'une force générée par ledit contact suivant au moins un axe de mesure, comprenant les étapes suivantes :

   - détermination de la position dudit contact par l'au moins un capteur de position,
   - mesure, par au moins un capteur de couple, d'au moins un couple suivant ledit axe de mesure, et
   - calcul de ladite force, en fonction de l'au moins un couple mesuré, et de la position dudit contact relativement audit axe de mesure.

7. Procédé (200) selon l'une quelconque des revendications précédentes, **caractérisé en ce qu'**il comprend en outre, pour au moins un contact, une étape (208) de détermination d'une pression exercée par ledit contact, en fonction de l'étendue de contact.

8. Procédé (200) selon l'une quelconque des revendications 6 ou 7, **caractérisé en ce que** l'étape (106) d'exécution d'une commande de contrôle prend en compte le couple et/ou la force et/ou la pression exercée par ledit contact.

9. Procédé (100;200) selon l'une quelconque des revendications précédentes, **caractérisé en ce que** l'étape (106) d'exécution d'une commande de contrôle comprend :

   - une mise à l'arrêt, ou une mise en mouvement, d'au moins une partie du robot (600) ; ou
   - un déplacement d'au moins une partie du robot (600) avec une vitesse dépendant d'une information relative à au moins une étendue de contact ; ou
   - un déplacement d'au moins une partie du robot (600) dans une direction dépendant de la position d'au moins un point de contact ; ou
   - un changement de mode de fonctionnement du robot.

10. Dispositif (500) de contrôle pour contrôler un robot, **caractérisé en ce qu'**il comprend au moins un module (502,504), dit de contrôle, configuré pour mettre en oeuvre toutes les étapes du procédé (100;200) selon l'une quelconque des revendications précédentes.

11. Robot (600) comprenant :

   - au moins un capteur (300), dit de position, agencé pour détecter au moins un contact d'un objet (304) avec le robot (600) ; et
   - au moins un dispositif de contrôle (500) selon la revendication 10.

12. Robot (600) selon la revendication précédente, **caractérisé en ce qu'**il comprend en outre au moins un capteur de couple ($506_1$-$506_3$) agencé pour mesurer au moins un couple exercé sur une partie du robot (600) suivant au moins un axe, dit de mesure.

**13.** Robot (600) selon l'une quelconque des revendications 11 ou 12, **caractérisé en ce que** l'au moins un capteur de position (300) comprend :

- au moins une électrode de mesure capacitive (302) agencée au niveau d'une partie de la surface du robot (600) ; et
- une électronique de détection capacitive (308) pour détecter un signal relatif au couplage capacitif entre au moins une électrode de mesure capacitive (302) et au moins un objet (304).

**14.** Robot (600) selon l'une quelconque des revendications 11 à 13, **caractérisé en ce qu'**il comprend un bras articulé (604-608) comportant :

- au moins une articulation (612-616) pourvue d'un capteur de couple ($506_1$-$506_3$), et
- au moins un capteur de position (300) agencé sur au moins une partie de la surface dudit robot (600).

**15.** Robot (600) selon l'une quelconque des revendications 11 à 14, **caractérisé en ce qu'**il comprend en outre une tête fonctionnelle, ou une interface de fixation d'une tête fonctionnelle, équipée d'un capteur de couple avec plusieurs axes de mesure, ladite tête fonctionnelle étant équipée d'au moins un capteur de position.

**16.** Robot (600) selon l'une quelconque des revendications 11 à 15, **caractérisé en ce qu'**il est de type humanoïde.

**Patentansprüche**

**1.** Verfahren (100; 200) zur Steuerung eines Roboters (600), umfassend die folgenden Schritte:

- Erfassen (102) mindestens eines Kontakts zwischen einem Objekt (304) und dem Roboter (600) mittels mindestens eines Positionssensors (300), mit dem der Roboter (600) ausgestattet ist,
- Bestimmen (104) für den mindestens einen Kontakt eines Kontaktausmaßes in Abhängigkeit von einer Messung des mindestens einen Positionssensors (300) und
- Ausführen (106) eines Steuerbefehls des Roboters unter Berücksichtigung von einer Information bezüglich des Kontaktausmaßes,

**dadurch gekennzeichnet, dass** der mindestens eine Positionssensor (300) mindestens eine kapazitive Messelektrode (302) aufweist, die angeordnet ist, um ein Messsignal in Bezug auf eine Kopplungskapazität zwischen der Messelektrode (302) und dem Objekt (304) abzugeben, wobei das Erkennen des Kontakts das Messsignal berücksichtigt.

**2.** Verfahren (100; 200) nach dem vorhergehenden Anspruch, **dadurch gekennzeichnet, dass** das Bestimmen des Kontaktausmaßes ein Signal, das von einer kapazitiven Messelektrode (302) abgegeben wird, ein zuvor festgelegtes nominelles Messsignal und die Fläche der Messelektrode (302) berücksichtigt.

**3.** Verfahren (100; 200) nach einem der Ansprüche 1 oder 2, **dadurch gekennzeichnet, dass**, wenn der Kontakt durch mehrere kapazitive Messelektroden (302) erfasst wird, das Kontaktausmaß unter Berücksichtigung der Fläche bestimmt wird, die von den kapazitiven Messelektroden (302) bedeckt ist, die den Kontakt erfassen.

**4.** Verfahren (200) nach einem der vorhergehenden Ansprüche, **dadurch gekennzeichnet, dass** es ferner einen Schritt (204) des Messens eines Drehmoments entlang mindestens einer Messachse durch mindestens einen Drehmomentsensor ($506_1$-$506_3$) aufweist, mit dem der Roboter (600) ausgestattet ist.

**5.** Verfahren (200) nach dem vorhergehenden Anspruch, **dadurch gekennzeichnet, dass** es ferner einen Schritt (204) des Validierens eines Kontakts eines Objekts mit dem Roboter aufweist, indem mindestens eine Drehmomentmessung verwendet wird.

**6.** Verfahren (200) nach einem der Ansprüche 4 oder 5, **dadurch gekennzeichnet, dass** es ferner für mindestens einen Kontakt einen Schritt (206) des Bestimmens einer Kraft, die durch den Kontakt erzeugt wird, entlang mindestens einer Messachse aufweist, umfassend die folgenden Schritte:

- Bestimmen der Position des Kontakts durch den mindestens einen Positionssensor,

- Messen durch mindestens einen Drehmomentsensor mindestens eines Drehmoments entlang der Messachse und
- Berechnen der Kraft in Abhängigkeit von dem mindestens einen gemessenen Drehmoment und der Position des Kontakts in Bezug auf die Messachse.

7. Verfahren (200) nach einem der vorhergehenden Ansprüche, **dadurch gekennzeichnet, dass** es ferner für mindestens einen Kontakt einen Schritt (208) des Bestimmens eines Drucks, der von dem Kontakt in Abhängigkeit von dem Kontaktausmaß ausgeübt wird, aufweist.

8. Verfahren (200) nach einem der Ansprüche 6 oder 7, **dadurch gekennzeichnet, dass** der Schritt (106) des Ausführens eines Steuerbefehls das Drehmoment und/oder die Kraft und/oder den Druck, der von dem Kontakt ausgeübt wird, berücksichtigt.

9. Verfahren (100; 200) nach einem der vorhergehenden Ansprüche, **dadurch gekennzeichnet, dass** der Schritt (106) des Ausführens eines Steuerbefehls aufweist:

   - ein Anhalten oder ein In-Bewegung-Setzen von mindestens einem Teil des Roboters (600) oder
   - ein Bewegen von mindestens einem Teil des Roboters (600) mit einer Geschwindigkeit, die von einer Information abhängt, die sich auf mindestens ein Kontaktausmaß bezieht, oder
   - ein Bewegen von mindestens einem Teil des Roboters (600) in eine Richtung, die von der Position des mindestens einen Kontaktpunkts abhängt, oder
   - ein Ändern des Betriebsmodus des Roboters.

10. Steuervorrichtung (500) zur Steuerung eines Roboters, **dadurch gekennzeichnet, dass** sie mindestens ein Steuermodul (502, 504) aufweist, das konfiguriert ist, um alle Schritte des Verfahrens (100; 200) nach einem der vorhergehenden Ansprüche umzusetzen.

11. Roboter (600), umfassend:

   - mindestens einen Positionssensor (300), der ausgebildet ist, um mindestens einen Kontakt eines Objekts (304) mit dem Roboter (600) zu erfassen, und
   - mindestens eine Steuervorrichtung (500) nach Anspruch 10.

12. Roboter (600) nach dem vorhergehenden Anspruch, **dadurch gekennzeichnet, dass** er ferner mindestens einen Drehmomentsensor ($506_1$- $506_3$) aufweist, der ausgebildet ist, um mindestens ein Drehmoment, das auf einen Teil des Roboters (600) ausgeübt wird, entlang mindestens einer Messachse zu messen.

13. Roboter (600) nach einem der Ansprüche 11 oder 12, **dadurch gekennzeichnet, dass** der mindestens eine Positionssensor (300) aufweist:

   - mindestens eine kapazitive Messelektrode (302), die an einem Teil der Oberfläche des Roboters (600) angeordnet ist, und
   - eine Elektronik zur kapazitiven Erfassung (308) zum Erfassen eines Signal bezüglich der kapazitiven Kopplung zwischen mindestens einer kapazitiven Messelektrode (302) und mindestens einem Objekt (304).

14. Roboter (600) nach einem der Ansprüche 11 bis 13, **dadurch gekennzeichnet, dass** er einen Gelenkarm (604-608) aufweist, umfassend:

   - mindestens ein Gelenk (612- 616), das mit einem Drehmomentsensor ($506_1$- $506_3$) versehen ist, und
   - mindestens einen Positionssensor (300), der auf mindestens einem Teil der Oberfläche des Roboters (600) angeordnet ist.

15. Roboter (600) nach einem der Ansprüche 11 bis 14, **dadurch gekennzeichnet, dass** er ferner einen Funktionskopf oder eine Schnittstelle zur Befestigung eines Funktionskopfes aufweist, der mit einem Drehmomentsensor mit mehreren Messachsen ausgestattet ist, wobei der Funktionskopf mit mindestens einem Positionssensor ausgestattet ist.

16. Roboter (600) nach einem der Ansprüche 11 bis 15, **dadurch gekennzeichnet, dass** er vom humanoiden Typ ist.

**Claims**

1. A method (100;200) for controlling a robot (600), comprising the following steps:

   - detecting (102) at least one contact between an object (304) and the robot (600), by means of at least one sensor (300), called position sensor, equipping said robot (600);
   - determining (104), for said at least one contact, a contact extent as a function of a measurement of the at least one position sensor (300); and
   - executing (106) a control command of the robot taking account of an item of information with respect to said contact extent;

   **characterized in that** the at least one position sensor (300) comprises at least one capacitive measurement electrode (302) arranged to supply a measurement signal relating to a coupling capacity between said mesurement electrode (302) and the object (304), the contact detection taking account of said measurement signal.

2. The method (100;200) according to the preceding claim, **characterized in that** determining the contact extent takes account of a signal supplied by a capacitive measurement electrode (302), a nominal measurement signal determined beforehand, and the surface area of said measurement electrode (302).

3. The method (100;200) according to any one of claims 1 or 2, **characterized in that**, when the contact is detected by several capacitive measurement electrodes (302), the contact extent is determined by taking account of the surface area covered by said capacitive measurement electrodes (302) detecting said contact.

4. The method (200) according to any one of the preceding claims, **characterized in that** it also comprises a step (204) of measuring a torque along at least one axis, called measurement axis, by at least one torque sensor ($506_1$-$506_3$) equipping the robot (600).

5. The method (200) according to the preceding claim, **characterized in that** it also comprises a step (204) of validating a contact of an object with the robot, by using at least one torque measurement.

6. The method (200) according to any one of claims 4 or 5, **characterized in that** it also comprises, for at least one contact, a step (206) of determining a force generated by said contact along at least one measurement axis, comprising the following steps:

   - determining the position of said contact by the at least one position sensor,
   - measuring, by at least one torque sensor, at least one torque along said measurement axis, and
   - calculating said force, as a function of the at least one measured torque, and of the position of said contact with respect to said measurement axis.

7. The method (200) according to any one of the preceding claims, **characterized in that** it also comprises, for at least one contact, a step (208) of determining a pressure exerted by said contact, as a function of the contact extent.

8. The method (200) according to any one of claims 6 or 7, **characterized in that** the step (106) of executing a control command takes account of the torque and/or the force and/or the pressure exerted by said contact.

9. The method (100; 200) according to any one of the preceding claims, **characterized in that** the step (106) of executing a control command comprises:

   - stopping, or starting, at least a part of the robot; or
   - displacing at least a part of the robot (600) with a speed that is dependent on an item of information relating to at least one contact extent; or
   - displacing at least a part of the robot (600) in a direction dependent on the position of at least one contact point; or
   - changing the mode of operation of the robot.

10. A control device (500) for controlling a robot, **characterized in that** it comprises at least one module (502,504), called control module, configured to implement all the steps of the method (100;200) according to any one of the preceding claims.

**11.** A robot (600) comprising:

- at least one sensor (300), called position sensor, arranged to detect at least one contact of an object (304) with the robot (600); and
- at least one control device (500) according to claim 10.

**12.** The robot (600) according to the preceding claim, **characterized in that** it also comprises at least one torque sensor $(506_1\text{-}506_3)$ arranged to measure at least one torque exerted on a part of the robot (600) along at least one axis, called measurement axis.

**13.** The robot (600) according to any one of claims 11 or 12, **characterized in that** the at least one position sensor (300) comprises:

- at least one capacitive measurement electrode (302) arranged at the level of a part of the surface of the robot (600); and
- a capacitive detection electronics (308), for detecting a signal relating to the capacitive coupling between at least one capacitive measurement electrode (302) and at least one object (304).

**14.** The robot (600) according to any one of claims 11 to 13, **characterized in that** it comprises an articulated arm (604-608) including:

- at least one articulation (612-616) provided with a torque sensor $(506_1\text{-}506_3)$, and
- at least one position sensor (300) arranged on at least a part of the surface of said robot (600).

**15.** The robot (600) according to any one of claims 11 to 14, **characterized in that** it also comprises a functional head, or an interface for attaching a functional head, equipped with a torque sensor with several measurement axes, said functional head being equipped with at least one position sensor.

**16.** The robot (600) according to any one of claims 11 to 15, **characterized in that** it is of the humanoid type.

100

| Détection de contact par capteur de position |—102

↓

| Détermination étendue de contact |—104

↓

| Déclenchement commande en fonction de l'étendue de contact |—106

## FIG. 1

200

| Détection d'approche |—202

↓

| Détection de contact par capteur de position |—102

↓

| Validation de contact par capteur de couple |—204

↓

| Détermination étendue de contact |—104

↓

| Détermination de la force exercée par le contact |—206

↓

| Détermination de la pression exercée par le contact |—208

↓

| Déclenchement commande en fonction de l'étendue de contact |—106

## FIG. 2

**FIG. 3**

**FIG. 4a**

**FIG. 4b**

**FIG. 5**

**FIG. 6**

**FIG. 7**

## RÉFÉRENCES CITÉES DANS LA DESCRIPTION

**Documents brevets cités dans la description**

- DE 102016201541 A1
- DE 102007020131 A1
- WO 2018108476 A1

**Littérature non-brevet citée dans la description**

- **E. MAGRINI ; F. FLACCO ; A. DE LUCA.** Estimation of contact forces using a virtual force sensor. *IEEE/RSJ International Conférence on Intelligent Robots and Systems, Chicago, IL,* 2014, 2126-2133